# EUROPEAN PATENT APPLICATION

(11) **EP 2 985 872 A1**
(43) Date of publication of application: **17.02.2016**
(21) Application number: 14773722.5
(22) Date of filing: 24.03.2014
(51) Int. Cl.: H02J 50/00, B60L 5/00, B60L 11/18, H02J 7/00

(54) **POWER SUPPLYING DEVICE, POWER RECEIVING DEVICE, AND POWER SUPPLYING SYSTEM**

(30) Priority: 26.03.2013 JP 2013063966
(71) Applicant: Panasonic Intellectual Property Management Co., Ltd., Osaka-shi, Osaka 540-6207 (JP)
(72) Inventor: OHASHI Osamu, Osaka 540-6207 (JP); KOIZUMI Masayoshi, Osaka 540-6207 (JP)
(74) Representative: Schwabe - Sandmair - Marx
(86) International application number: PCT/JP2014/001675
(87) International publication number: WO 2014/156107

(57) **Abstract**

The purpose of the invention is to facilitate mounting of a power receiving coil on a vehicle and also extend the allowable range of the positional shift of the power receiving coil with respect to a power supplying coil to prevent a power supply efficiency from 5 lowering. A power supplying device (100) uses electromagnetic force to supply power to a vehicle (130) having a power receiving coil (153a) and has a power supplying coil (103a) facing the power receiving coil (153a) and supplying power thereto. The power supplying coil (103a) has substantially the same shape as the power receiving coil (153a) and has a first length longer than a second length, said first length being the length in the 10 right and left direction of the vehicle (130), said second length being the length in the front and rear direction of the vehicle (130).

## Description

### Technical Field

The present invention relates to a power supply apparatus that supplies power to a power receiving coil provided on a vehicle using an electromagnetic force, and also relates to a power receiving apparatus and a power supply system.

### Background Art

Conventionally, a wireless power supply apparatus is known which is installed on the ground and supplies power to a vehicle-mounted power receiving section (e.g., Patent Literature 1 (hereinafter, referred to as "PTL 1")).

The power supply apparatus in PTL 1 includes two units; a power transmission unit and a power receiving unit. The power transmission unit accommodates a true-circle power transmission coil and is provided on a road side of a parking space or the like at a position where the vehicle is parked. The power receiving unit accommodates a true-circle power receiving coil, and is provided on the bottom surface of the vehicle at a position opposite to the power transmission unit installed on the ground.

### Citation List

### Patent Literature

### PTL 1

Japanese Patent Application Laid-Open No. 2011-10435

### Summary of Invention

### Technical Problem

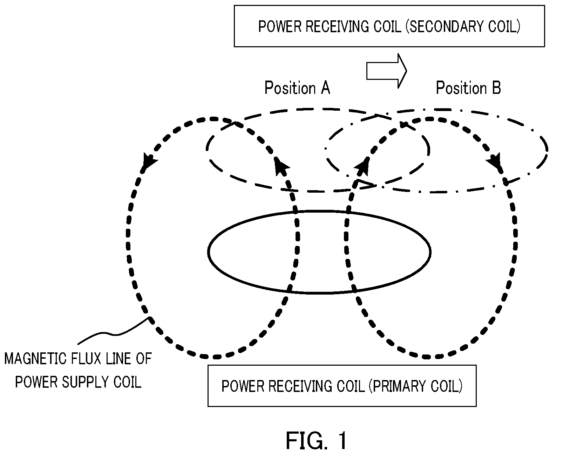

A positional relationship between the power transmission coil (may also be called "power supply coil") and the power receiving coil during supply of power may cause deterioration of power supply efficiency. For example, FIG. 1 illustrates a relationship between the position of the power receiving coil (secondary coil shown by broken line or single-dot dashed line) with respect to the power supply coil (primary coil shown by solid line) and an interlinkage magnetic flux. In FIG. 1, it is assumed that the power supply coil and the power receiving coil have an identical shape. Suppose that the position of the power receiving coil where the central axis of the power supply coil (not shown) overlaps the central axis of the power receiving coil (not shown) is Position A, and the position of the power receiving coil shifted by half the coil diameter from Position A is Position B. As shown in FIG. 1, the orientation of the interlinking magnetic flux changes between a case where the power receiving coil that receives a magnetic flux generated from the power supply coil is located at Position A and a case where the power receiving coil is located at Position B. When the power receiving coil is located at Position B, the magnetic flux is interlinked in such a way that the magnetic flux is canceled out, so that no current flows through the power receiving coil and the power supplied becomes 0 (null point).

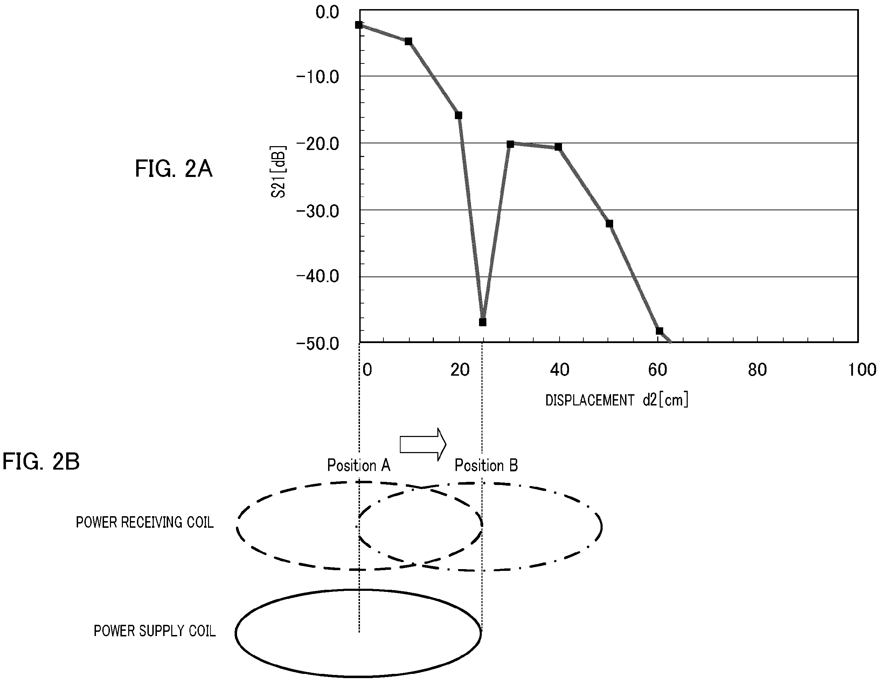

FIG. 2A illustrates a power supply characteristic with respect to a displacement between the power supply coil and the power receiving coil. In FIG. 2A, the horizontal axis represents displacement d2 [cm] of the power receiving coil with respect to the power supply coil and the vertical axis represents the degree of coupling [dB]. In FIG. 2A, suppose that the power supply coil and the power receiving coil have the same coil diameter of 50 [cm]. It is observed in FIG. 2B that when the power receiving coil is located at Position B (that is, position shifted by half the coil diameter (25 [cm]) from Position A with respect to the power supply coil, the degree of coupling, that is, supplied power becomes 0 (null point), and power supply efficiency drastically decreases.

In order to prevent deterioration of power supply efficiency and increase the allowable range of displacements of the power receiving coil with respect to the power supply coil, it is necessary to increase the coil diameters of the power supply coil and the power receiving coil to an extent that even when a displacement of the power receiving coil with respect to the power supply coil occurs, this will not result in a null point of supplied power. However, increasing the diameter of the power receiving coil in the same true-circle shape as disclosed in PTL 1 increases the size of the power receiving coil, resulting in a problem in that it is difficult to mount the power receiving coil on a vehicle having a limited mounting space.

An object of the present invention is to provide a power supply apparatus, a power receiving apparatus and a power supply system capable of preventing deterioration of power supply efficiency by increasing an allowable range of displacements of a power receiving coil with respect to a power supply coil, while facilitating mounting of the power receiving coil on the vehicle.

### Solution to Problem

A power supply apparatus according to an aspect of the present invention supplies power to a vehicle including a power receiving coil, using an electromagnetic force, the power supply apparatus including a power supply coil that faces the power receiving coil and that supplies power, in which the power supply coil has a shape substantially identical to that of the power receiving coil, and has a first length longer than a second length, the first length being a length of the vehicle in a left and right direction of the vehicle, the second length being a length of the vehicle in a front and rear direction of the vehicle.

A power receiving apparatus according to an aspect of the present invention is provided on a vehicle and receives power supply from a power supply apparatus comprising a power supply coil, using an electromagnetic force, the power receiving apparatus including a power receiving coil that faces the power supply coil and receives power supply, in which the power receiving coil has a shape substantially identical to that of the power supply coil, and has a first length longer than a second length, the first length being a length of the vehicle in a left and right direction of the vehicle, the second length being a length of the vehicle in a front and rear direction of the vehicle.

A power supply system according to an aspect of the present invention includes: a power receiving apparatus provided on a vehicle; and a power supply apparatus that supplies power to the vehicle using an electromagnetic force, in which the power receiving apparatus comprises a power receiving coil that faces the power supply apparatus and receives power supply, the power supply apparatus includes a power supply coil that faces the power receiving coil and supplies power, and the power receiving coil and the power supply coil have shapes substantially identical with each other, and have lengths in a left and right direction of the vehicle, the lengths being longer than lengths of the power receiving coil and the power supply coil in a front and rear direction of the vehicle.

### Advantageous Effects of Invention

According to the present invention, it is possible to prevent deterioration of power supply efficiency by increasing the allowable range of displacements of the power receiving coil with respect to the power supply coil, while facilitating mounting of the power receiving coil on the vehicle.

### Brief Description of Drawings

FIG. 1 is a diagram illustrating a relationship between a position of a power receiving coil and an interlinkage magnetic flux;
FIGS. 2A and 2B are diagrams illustrating a power supply characteristic corresponding to a displacement of the power receiving coil with respect to the power supply coil;
FIG. 3 is a block diagram illustrating a configuration of a power supply system according to an embodiment of the present invention;
FIG. 4 is a diagram illustrating a power supply coil and a power receiving coil according to the embodiment of the present invention;
FIG. 5 is a plan view of a vehicle guiding system according to the embodiment of the present invention when the vehicle is parked at a position for receiving power supply; and
FIG. 6 is a diagram illustrating a case where a car-stop is provided in the power supply system according to the embodiment of the present invention.

### Description of Embodiment

Hereinafter, an embodiment of the present invention will be described in detail with reference to the accompanying drawings.

### <Configuration of Power Supply System>

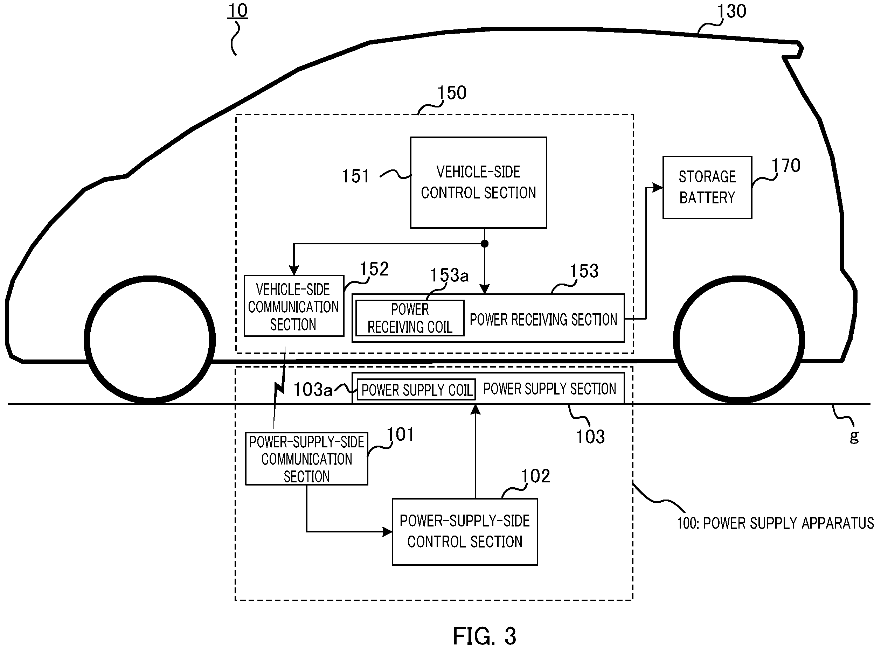

FIG. 3 is a block diagram illustrating a configuration of power supply system 10 according to the embodiment of the present invention.

Power supply system 10 includes power supply apparatus 100, vehicle 130, power receiving apparatus 150 and storage battery 170.

Power supply apparatus 100 is installed on or buried in the ground so that power supply section 103 is exposed from ground surface g. Power supply apparatus 100 is provided, for example, in a parking space, so as to face power receiving section 153, and supplies power to power receiving apparatus 150 (power receiving section 153) while vehicle 130 is parked.

Vehicle 130 includes power receiving apparatus 150 and storage battery 170, and runs using storage battery 170 as a power source. Vehicle 130 is an automobile that runs on power of storage battery 170 such as a plug-in hybrid electric vehicle (PHEV) or an electric vehicle (EV).

Power receiving apparatus 150 supplies the power supplied from power supply apparatus 100 to storage battery 170.

Storage battery 170 stores the power supplied from power receiving apparatus 150.

### <Configuration of Power Supply Apparatus>

Power supply apparatus 100 includes power-supply-side communication section 101, power-supply-side control section 102 and power supply section 103.

Power-supply-side communication section 101 receives a power-supply-start signal (charge-start signal) or a power-supply-stop signal (charge-stop signal) from vehicle-side communication section 152. Power-supply-side communication section 101 outputs the received power-supply-start signal or power-supply-stop signal to power-supply-side control section 102.

Power-supply-side control section 102 controls power supply section 103 so as to start power supply according to the power-supply-start signal inputted from power-supply-side communication section 101. Power-supply-side control section 102 controls power supply section 103 so as to stop power supply according to the power-supply-stop signal inputted from power-supply-side communication section 101.

Power supply section 103 includes power supply coil 103a. Power supply section 103 supplies a current at a predetermined frequency to power supply coil 103a under the control of power-supply-side control section 102, and thereby supplies power to power receiving section 153 using an electromagnetic force. This power supply is performed according to an electromagnetic induction scheme or a magnetic resonance scheme (magnetic field resonance scheme), for example. Note that details of the configuration of power supply coil 103a will be described later.

### <Configuration of Power Receiving Apparatus>

Power receiving apparatus 150 includes vehicle-side control section 151, vehicle-side communication section 152 and power receiving section 153.

Vehicle-side control section 151 controls vehicle-side communication section 152 and power receiving section 153 so as to perform various processes associated with starting of charging (power receiving), various processes associated with stopping of charging or various processes associated with power supply to storage battery 170.

Vehicle-side communication section 152 generates a charge-start signal (power-supply-start signal) or a charge-stop signal (power-supply-stop signal) under the control of vehicle-side control section 151 and transmits the generated charge-start signal or charge-stop signal to power-supply-side communication section 101.

Power receiving section 153 is provided at the bottom of vehicle 130, includes power receiving coil 153a and faces power supply section 103 in a wireless state when storage battery 170 is charged. Power receiving section 153 supplies the power supplied from power supply section 103 to power receiving coil 153a to storage battery 170 under the control of vehicle-side control section 151. Note that details of the configuration of power receiving coil 153a will be described later.

### <Configuration of Power Supply Coil and Power Receiving Coil>

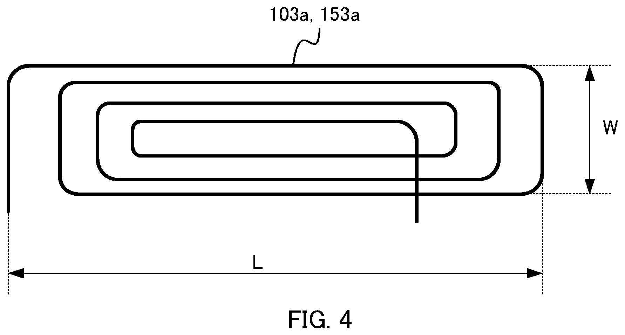

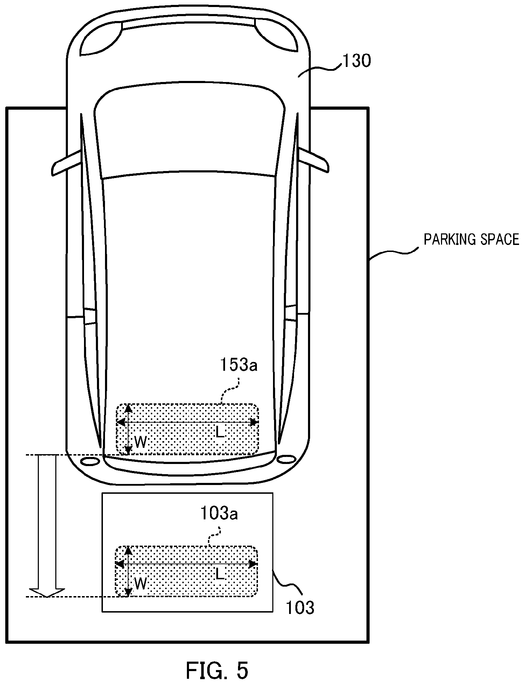

FIG. 4 is a diagram illustrating a configuration of power supply coil 103a and power receiving coil 153a. FIG. 5 is a plan view illustrating, as an example, power supply system 10 when vehicle 130 is moving to a position to receive power supply in a parking space in which power supply apparatus 100 is installed.

Here, the more magnetic fluxes interlink with both the power supply coil (primary coil) and the power receiving coil (secondary coil), the higher the power supply efficiency becomes. Therefore, when the power supply coil and the power receiving coil are in an asymmetric shape (that is, having different shapes), this may result in deterioration of power supply efficiency, and so the power supply coil and the power receiving coil are preferably in a symmetric shape (that is, having an identical shape). Thus, as shown in FIG. 4 and FIG. 5, power supply coil 103a and power receiving coil 153a have a substantially identical shape (identical size) to achieve maximum power supply efficiency.

For example, as shown in FIG. 4, power supply coil 103a and power receiving coil 153a are each a planar spiral coil.

In FIG. 5, when vehicle 130 is stopped at a position (target stop position) where the vehicle is supposed, in a design stage, to receive power supply, power supply coil 103a and power receiving coil 153a are installed in the parking space and on the bottom surface in vehicle 130 respectively so that power supply coil 103a and power receiving coil 153a overlap each other in a plan view. In other words, at the target stop position of vehicle 130 when power is supplied, when power supply coil 103a is projected onto power receiving section 153 toward the direction of power receiving coil 153a, power supply coil 103a and power receiving coil 153a substantially overlap each other.

Length W is a length of power supply coil 103a in a length direction of the parking space and is a length of power receiving coil 153a in a moving direction (front and rear direction) of vehicle 130. Length L is a length of power supply coil 103a in a width direction of the parking space, and is a length of power receiving coil 153a in a direction (left and right direction) orthogonal to the front and rear direction of vehicle 130.

In power supply coil 103a and power receiving coil 153a, L is longer than W. That is, power supply coil 103a and power receiving coil 153a each have a rectangular or elliptical shape, for example.

Next, a relationship between length L and length W will be described.

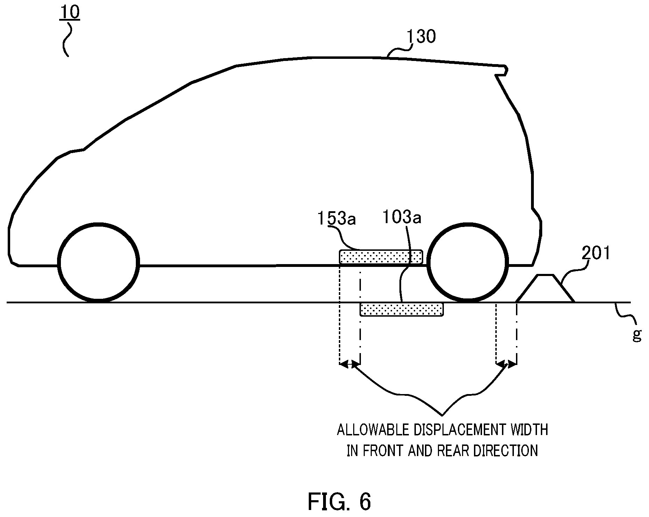

A case will be described below as an example where a car-stop (wheel stopper) member is installed in the parking space as shown in FIG. 6.

More specifically, as shown in FIG. 6, a position at which vehicle 130 is parked with car-stop 201 in contact with rear wheels of vehicle 130 (position shown by single-dot dashed line) is designated as a target stop position in the front and rear direction of vehicle 130 when power is supplied. Note that FIG. 6 shows a state in which vehicle 130 is located at a position displaced from the target stop position (single-dot dashed line) by an allowable width of displacement (allowable displacement width in the front and rear direction; dotted line) in the front and rear direction of vehicle 130.

Providing car-stop 201 in this way makes it easier to identify the stop position in the front and rear direction of vehicle 130. Thus, it is possible to reduce the displacement of power receiving coil 153a with respect to power supply coil 103a (displacement from the target stop position) in the front and rear direction of vehicle 130 compared to the left and right direction. That is, it is possible to narrow the allowable range of displacement in the front and rear direction (allowable displacement width in the front and rear direction) of vehicle 130 shown in FIG. 6 compared to the allowable displacement range in the left and right direction (allowable displacement width in the left and right direction).

Thus, the following description assumes a case where a displacement of power receiving coil 153a in the front and rear direction of vehicle 130 (displacement from the target stop position in the front and rear direction) is smaller than a displacement of power receiving coil 153a in the left and right direction of vehicle 130 (displacement from the target stop position in the left and right direction).

For example, when vehicle 130 is parked in the parking space in which power supply section 103 is installed, a displacement of power receiving coil 153a with respect to power supply coil 103a in the front and rear direction of vehicle 130 is generally assumed to be ±5 [cm] and a displacement of power receiving coil 153a with respect to power supply coil 103a in the left and right direction of vehicle 130 is generally assumed to be ±15 [cm].

In this case, suppose length L (coil length in the left and right direction) is 60 [cm] and length W (coil length in the front and rear direction) is 20 [cm], for example. That is, length L and length W are set to lengths four times the displacements assumed in the respective directions.

As described above, with reference to FIGS. 1 and 2, a null point of supplied power is generated when a displacement in each direction becomes half the coil diameter. Thus, when L=60 [cm] and W=20 [cm], it is when the displacement is 30 [cm] that a null point of supplied power is generated in the left and right direction and it is when the displacement is 10 [cm] that a null point of supplied power is generated in the front and rear direction.

That is, a displacement corresponding to a null point of supplied power is a length two times a maximum displacement (left and right direction: ±15 [cm], front and rear direction: ±5 [cm]) assumed in power receiving coil 153a. Thus, even when a maximum displacement is generated between power supply coil 103a and power receiving coil 153a, the supplied power does not fall into a null point in any direction.

A power supply characteristic at the maximum displacement assumed here (half the displacement corresponding to the null point) corresponds to, for example, a power supply characteristic (approximately -5 [dB]) near displacement d2=12.5 [cm] with a power supply characteristic in FIG. 2 (coil diameter = 50 [cm], position corresponding to the null point d2=25 [cm]) (that is, half the displacement corresponding to the null point). That is, by setting L and W so that the assumed displacement of power receiving coil 153a becomes a length half the displacement where a null point of supplied power is generated (that is, to be sufficiently short), it is possible to avoid the system from falling into a low power supply characteristic near the null point (e.g., around 25 [cm] in FIG. 2) and achieve a high power supply characteristic.

In this way, the sizes of power supply coil 103a and power receiving coil 153a are set (here, four times the displacements assumed) so that the displacement corresponding to the null point of supplied power becomes sufficiently large (two times here). By so doing, it is possible to improve the power supply efficiency while preventing the supplied power from falling into a null point due to a displacement of power receiving coil 153a when vehicle 130 is parked.

The size of power supply coil 103a and power receiving coil 153a in the left and right direction of vehicle 130 (width direction of the parking space) (e.g., L=60 [cm]) is larger than that in the front and rear direction of vehicle 130 (length direction of the parking space) (e.g., W=20 [cm]). It is thereby possible to increase the allowable range of displacement in the left and right direction where displacement is more likely to occur compared to the front and rear direction of vehicle 130, thus avoiding a null point of supplied power due to a displacement in the left and right direction.

On the other hand, the size of power supply coil 103a and power receiving coil 153a in the front and rear direction of vehicle 130 (e.g., W=20 [cm]) is shorter than that in the left and right direction of vehicle 130 (e.g., L=60 [cm]). That is, vehicle 130 can be provided with power receiving coil 153a that has a long axis in the left and right direction. In this way, even when the size of power receiving coil 153a is increased to widen the allowable range of displacement, it is possible to suppress an increase in the size in the front and rear direction of vehicle 130. In the present embodiment, it is easier to mount power receiving coil 153a on a vehicle having a limited mounting space for the power receiving coil compared to the related art.

Moreover, since power supply coil 103a and power receiving coil 153a have an identical shape (that is, a symmetric shape), it is possible to increase power supply efficiency.

Conventionally, true-circle power supply and power receiving coils are used (e.g., see PTL 1). In contrast, the present embodiment uses landscape shaped (shape that satisfies L>W) power supply coil 103a and power receiving coil 153a. As described above, a displacement in the left and right direction of a vehicle is generally assumed to be larger than a displacement in the front and rear direction when the vehicle is parked. For this reason, when a coil is formed using the same winding, making length L in the left and right direction of vehicle 130 larger than length W in the front and rear direction as in the present embodiment rather than the conventional true-circle shape is more effective in preventing the above-described null point. Thus, if the same winding is used, adopting the landscape shape (L>W) as in the present embodiment is more appropriate than adopting a true-circle shape.

For the above reasons, the present embodiment can prevent deterioration of power supply efficiency by widening the allowable range of displacements of the power receiving coil with respect to the power supply coil, while facilitating mounting of the power receiving coil on the vehicle.

### (Other Embodiments)

[1] A case has been described in the above-described embodiment as an example where power supply coil 103a and power receiving coil 153a have sizes four times the displacement assumed in each direction (that is, a size whereby a displacement corresponding to the null point of supplied power becomes two times the displacement assumed). However, the sizes of power supply coil 103a and power receiving coil 153a are not limited to the above-described sizes. That is, the sizes of power supply coil 103a and power receiving coil 153a may be set such that the displacement corresponding to the null point of supplied power is not included in the assumed range of displacement. More specifically, the sizes (L and W) of power supply coil 103a and power receiving coil 153a may be at least greater than two times the assumed range of displacement of the power receiving coil from the target stop position. That is, half the coil diameter (corresponding to the null point) may exceed the assumed range of displacement. By so doing, it is possible to at least avoid the null point of supplied power even when a displacement of power receiving coil 153a in power supply system 10 takes any value within the assumed range.
   For example, when a displacement of power receiving coil 153a with respect to power supply coil 103a is assumed to be within ±5 [cm] in the front and rear direction of vehicle 130 and is assumed to be within ±15 [cm] in the left and right direction of vehicle 130, W may be longer than 10 [cm] and L may be longer than 30 [cm]. For example, a combination of numerical values of W=20, 40 [cm] (>10 [cm]) and L=60, 80 [cm] (>30 [cm]) may be adopted as the sizes of power supply coil 103a and power receiving coil 153a. These numerical values may be set according to a settable size (vehicle width or the like of vehicle 130) of power receiving coil 153a in vehicle 130, for example.
[2] A case has been described in the above-described embodiment where car-stop 201 is provided as shown in FIG. 6, but without being limited to the car-stop, a structure may be provided instead, which facilitates identification of a target stop position in the front and rear direction of vehicle 130. For example, at the target stop position in the front and rear direction of vehicle 130 (position at which power supply coil 103a and power receiving coil 153a face each other), grooves in which tires of vehicle 130 (front wheels or rear wheels) are fitted may be formed in the parking space (ground surface g). These grooves also correspond to a car-stop member.
[3] When a parking operation (e.g., operation of pulling the hand brake lever) is performed after the rear wheels of vehicle 130 come into contact with car-stop 201, vehicle 130 may actually stop after slightly passing the contact position. Thus, the installation position of power supply coil 103a in the front and rear direction of the parking space and the installation position of power receiving coil 153a in the front and rear direction of vehicle 130 may be set so that the position at which the rear wheels of vehicle 130 come into contact with car-stop 201 becomes a maximum value of displacement assumed in the front and rear direction. That is, the position at which vehicle 130 completely stops after the parking operation may be a target stop position in the front and rear direction of vehicle 130 (position at which power supply coil 103a and power receiving coil 153a overlap each other in a plan view). By so doing, it is possible to improve power supply efficiency at the target stop position to a maximum.
[4] Although FIG. 6 is shown as an exemplary installation location of power receiving coil 153a, the installation location of power receiving coil 153a is not limited to FIG. 6, but may be the bottom part between the rear wheels of vehicle 130, the bottom part of the trunk provided in the rear of vehicle 130 or the bottom part between the front wheels of vehicle 130 or the like. As the installation location of power receiving coil 153a, power receiving coil 153a can be installed on the ceiling surface of vehicle 130. In this case, power supply section 103 is installed at a place located above vehicle 130 such as the ceiling of a garage when vehicle 130 is parked.
[5] As shown in FIG. 3, when power supply section 103 is installed on or buried in the ground so that it is exposed from ground surface g, the width of a casing of power supply section 103 itself may be set to a length corresponding to the tire width of vehicle 130 (e.g., width between the left and right tires). By so doing, for example, when vehicle 130 enters the parking space in which power supply section 103 is installed, if the vehicle does not stop at an appropriate stop position, vehicle 130 runs on power supply section 103, thus making it possible to notify the driver that it is not an appropriate stop position. This allows vehicle 130 to stop at a target stop position appropriately.

The disclosure of Japanese Patent Application No. 2013-063966, filled on March 26, 2013, including the specification, drawings, and abstract is incorporated herein by reference in its entirety.

### Industrial Applicability

The power supply apparatus, the power receiving apparatus and the power supply system according to the present invention are suitable for use in supplying power, in a wireless manner, to a power receiving section provided on the vehicle.

### Reference Signs List

- 10: Power supply system
- 100: Power supply apparatus
- 101: Power-supply-side communication section
- 102: Power-supply-side control section
- 103: Power supply section
- 103a: Power supply coil
- 130: Vehicle
- 150: Power receiving apparatus
- 151: Vehicle-side control section
- 152: Vehicle-side communication section
- 153: Power receiving section
- 153a: Power receiving coil
- 170: Storage battery
- 201: Bumping post

## Claims

1. A power supply apparatus that supplies power to a vehicle including a power receiving coil, using an electromagnetic force, the power supply apparatus comprising a power supply coil that faces the power receiving coil and that supplies power, wherein
the power supply coil has a shape substantially identical to that of the power receiving coil, and has a first length longer than a second length, the first length being a length of the vehicle in a left and right direction of the vehicle, the second length being a length of the vehicle in a front and rear direction of the vehicle.

2. The power supply apparatus according to claim 1, wherein,
when the power supply coil is projected onto the power receiving coil toward a direction of the power receiving coil at a target stop position of the vehicle where the vehicle is supplied with power, the power supply coil and the power receiving coil substantially overlap each other, and
the target stop position of the vehicle in the front and rear direction is a position where the vehicle stops while a rear wheel of the vehicle is in contact with a car-stop member.

3. The power supply apparatus according to claim 1, wherein,
when an assumed range of displacements of the power receiving coil from the target stop position is equal to or less than a third length in the front and rear direction of the vehicle and is equal to or less than a fourth length in the left and right direction of the vehicle, the first length is greater than at least twice the third length, and the second length is greater than at least twice the fourth length.

4. The power supply apparatus according to claim 1, wherein the power supply coil is a spiral coil.

5. A power receiving apparatus that is provided on a vehicle and that receives power supply from a power supply apparatus comprising a power supply coil, using an electromagnetic force, the power receiving apparatus comprising a power receiving coil that faces the power supply coil and receives power supply, wherein
the power receiving coil has a shape substantially identical to that of the power supply coil, and has a first length longer than a second length, the first length being a length of the vehicle in a left and right direction of the vehicle, the second length being a length of the vehicle in a front and rear direction of the vehicle.

6. The power receiving apparatus according to claim 5, wherein the power receiving coil is a spiral coil.

7. A power supply system comprising:
a power receiving apparatus provided on a vehicle; and
a power supply apparatus that supplies power to the vehicle using an electromagnetic force, wherein
the power receiving apparatus comprises a power receiving coil that faces the power supply apparatus and receives power supply,
the power supply apparatus comprises a power supply coil that faces the power receiving coil and supplies power, and
the power receiving coil and the power supply coil have shapes substantially identical with each other, and have lengths in a left and right direction of the vehicle, the lengths being longer than lengths of the power receiving coil and the power supply coil in a front and rear direction of the vehicle.
